Europäisches Patentamt

European Patent Office

Office européen des brevets

(11) Veröffentlichungsnummer: **0 330 039 B1**

## (12) EUROPÄISCHE PATENTSCHRIFT

(45) Veröffentlichungstag der Patentschrift: **05.05.93**

(21) Anmeldenummer: **89102427.5**

(22) Anmeldetag: **13.02.89**

(51) Int. Cl.5: **C08F 212/12**, //(C08F212/12, 220:44,220:56)

(54) **Terpolymer−Latex.**

(30) Priorität: **26.02.88 DE 3806075**

(43) Veröffentlichungstag der Anmeldung:
**30.08.89 Patentblatt 89/35**

(45) Bekanntmachung des Hinweises auf die
Patenterteilung:
**05.05.93 Patentblatt 93/18**

(84) Benannte Vertragsstaaten:
**DE ES FR GB IT**

(56) Entgegenhaltungen:
**EP−A− 0 188 814**
**EP−A− 0 330 038**
**US−A− 4 427 832**

**DATABASE CHEMICAL ABSTRACTS,**
**HOST:STN, Band 107, Nr. 10, 1987, Zusam−**
**menfassung Nr. 78311z, Columbus, Ohio, US;**
**E. STAUDNER et al.: "Functional terpoly−**
**mers"**

(73) Patentinhaber: **BAYER AG**

**W−5090 Leverkusen 1 Bayerwerk(DE)**

(72) Erfinder: **Jansen, Ulrich, Dr.**
**Stürzelberger Strasse 50**
**W−4047 Dormagen 5(DE)**
Erfinder: **Ott, Karl−Heinz, Dr.**
**Paul−Klee−Strasse 54**
**W−5090 Leverkusen 1(DE)**

## Beschreibung

Die Erfindung betrifft einen Latex eines $\alpha-$Methylstyrol/Acrylnitril/Methacrylamid$-$Terpolymerisats, der eine ausgezeichnete Rührstabilität aufweist.

Wärmeformbeständige $\alpha-$Methylstyrol/Acrylnitril (AMS/ACN)$-$Copolymerisate wurden bereits durch Emulsionspolymerisation zum Latex und nachfolgende Koagulation hergestellt (vgl. US$-$PS 3 010 936, EP$-$A$-$42 572, US$-$PS 4 659 790).

Bestimmte Copolymerisate aus $\alpha-$Methylstyrol (AMS), Acrylnitril (ACN) mit Methacrylamid (MAA) sind durch Lösungspolymerisation hergestellt worden (Chem. pap. 41 (1), 119$-$124 (1987)). Eine technische Herstellung ist auf diesem Weg allerdings nicht möglich.

Bekannte Verfahren zur Herstellung von $\alpha-$Methylstyrol$-$Polymerlatices liefern jedoch nur Latices mit einer geringen Stabilität gegen Scherung, so daß ihre wirtschaftliche Herstellung und Handhabung schwierig ist.

Die Erfindung betrifft einen $\alpha-$Methylstyrol/Acrylnitril/Methacrylamid$-$Terpolymerisatlatex mit verbes$-$serter Stabilität, ohne höhere Anteile an Polymerisationshilfsstoffen, (die sich in der Regel nachteilig auf die Qualität der daraus hergestellten Formmassen auswirken).

Es wurde gefunden, daß thermoplastische Formmassen, basierend auf einem Terpolymerisat aus $\alpha-$Methylstyrol, Acrylnitril und Methacrylamid eine hohe Wärmeformbeständigkeit und gute Thermostabilität bei hohen Verarbeitungstemperaturen aufweisen. Bei der Herstellung dieser Terpolymerisate durch Emul$-$sionspolymerisation werden Polymerisatlatices gebildet, die gegenüber herkömmlichen $\alpha-$Methylstyrol und Acrylnitril einpolymerisiert enthaltenden Co$-$ oder Terpolymerisatlatices eine deutlich verbesserte Stabilität gegen mechanische Scherung aufweisen.

Dies ist besonders vorteilhaft, weil hochwärmeformbeständige AMS$-$Polymerisat$-$Latices hergestellt werden können, die einen deutlich höheren Polymerisatgehalt aufweisen und damit auch eine wirtschaftli$-$chere Herstellung des Copolymerisats durch Verbesserung der Raum/Zeit$-$Ausbeute möglich wird.

Man kann auch erfindungsgemäß, stabile AMS$-$Copolymerisate mit deutlich geringeren Mengen an Polymerisationshilfsstoffen z.B. (Emulgator) herstellen, ohne daß ihre Stabilität zu gering wird.

Gegenstand der Erfindung ist somit ein Latex eines thermoplastischen Terpolymerisats, hergestellt durch Emulsionspolymerisation von

A.1
50$-$85 Gew.$-$Teilen, bevorzugt 62$-$85 Gew.$-$Teilen, besonders bevorzugt 69$-$85 Gew.$-$Teilen $\alpha-$Methylstyrol;

A.2
10$-$50 Gew.$-$Teilen, bevorzugt 14$-$37 Gew.$-$Teilen, besonders bevorzugt 14$-$30 Gew.$-$Teilen Acrylnitril und/oder Methacrylnitril
und

A.3
1$-$50 Gew.$-$Teilen, bevorzugt 1$-$20 Gew.$-$Teilen, besonders bevorzugt 1 bis 10 Gew.$-$Teilen Me$-$thacrylamid

Der erfindungsgemäße Terpolymerisatlatex kann durch an sich bekannte Emulsionspolymerisation hergestellt werden. Dabei ist das Zulauf$-$ und das Batch$-$Zulauf$-$Verfahren bei Temperaturen von 50$-$90°C bevorzugt.

Als Emulgatoren können bekannte, vorzugsweise anionische Tenside eingesetzt werden: z.B. Na$-$ oder K$-$Salze der disproportionierten Abietinsäure oder höherer Fettsäuren und Alkalisalze von Alkyl$-$, und Alkylarylsulfonsäuren sowie Alkylarylcarbonsäuren. Auch organische Sulfate sind geeignet. Auch nicht$-$ionische Emulgatoren, z.B. Polyethylenoxidalkylether oder Kombinationen mehrerer Emulgatoren können verwendet werden.

Als Initiatoren können wasserlösliche organische Peroxide, Azoverbindungen, Alkalipersulfate und $-$perphosphate eingesetzt werden; bei Polymerisationstemperaturen unter 60°C sind Redoxsysteme auf Basis organischer Peroxide und wasserlöslicher Reduktionsmittel besonders geeignet. Beispiele für Initia$-$toren sind Kalium$-$ und Ammoniumpersulfat und als Redoxsysteme Cumolhydroperoxid/$Fe^{++}$/Rongalit;p$-$Methanhydroperoxid/$Fe^{++}$/Rongalit; Diisopropylbenzolhydroperoxid/$Fe^{++}$/Ascorbinsäure.

Als Regler zur Einstellung der Molekulargewichte der Polymerisate kann man organische Schwefelver$-$bindungen, wie Mercaptane und Disulfide verwenden, wobei langkettige Mercaptane, z.B. n$-$ und tert.$-$Dodecylmercaptan bevorzugt sind. Die Regler werden zweckmäßig im Monomergemisch gelöst.

Emulgatoren, Initiatoren und Regler können auch in der wäßrigen Flotte vorgelegt oder separat während der Polymerisation kontinuierlich oder diskontinuierlich zugegeben werden.

Nach beendeter Polymerisation wird der erhaltene Copolymerisatlatex, gegebenenfalls nach Mischen mit weiteren Polymerisat − Latices und/oder nach Zusatz von Zuschlagstoffen auf bekannte Weise koaguliert (z.B. durch Zusatz von Mineralsäure und/oder Salz) und gewaschen. Das Copolymerisat kann im Vakuum bei 110 − 150°C zum Pulver getrocknet werden oder vorzugsweise durch Entgasung der Polymerschmelze auf einem Extruder getrocknet werden.

Um Formmassen mit sehr guter Wärmeformbeständigkeit zu erhalten, ist es erforderlich, den Anteil an flüchtigen Bestandteilen (Wasser, Restmonomeren) auf weniger als 4000 ppm, vorzugsweise auf weniger als 2000 ppm, zu reduzieren.

Die in den folgenden Beispielen und Vergleichsbeispielen angegebenen Mengen sind Gewichtsteile.

I Prüfmethoden

Glastemperatur (Tg)  Thermomechanische Analyse (TMA), Gerät TMS − 1, Perkin − Elmer, Penetration − mode, Meßsondendurchmesser 1 mm, Drucklast, 0,2 N, Aufheiz − rate 5 k/min

Messung der Latexscherstabilität

Zur Beurteilung der Latexscherstabilität von Komponente A wurde ein "Ultra − Turrax, Typ T 45" (Firma Jahnke & Kunkel GmbH & Co. KG / IKA − Werke Staufen, West Germany) verwendet.

Eine Latexprobe des Terpolymerisats A wurde bei Raumtemperatur (und gegebenenfalls bei 75° C) und pH − Wert 9 durch das rotierende Messer des Ultra − Turrax mit 10000 U/min geschert. Gemessen wurde die Zeit bis zur ersten Koagulatbildung, deutlich erkennbar am Anstieg der Leistungsaufnahme des Ultra − Turrax.

Eine ausreichende Scherstabilität ist gegeben, wenn der Latex mehr als 30 Sekunden ohne Koagulation stabil bleibt. Bei scherstabilen Latices wurde der Test nach mehr als 60 Sekunden abgebrochen.

II Herstellung des Terpolymerisatlatex

Beispiele A − 1 bis A − 5 sowie Vergleichsbeispiele A − I bis A − IV

In einem 10 − 1 − Glaskolben wurde eine Emulgatorlösung (s. Tab.) als Vorlage 1 vorgelegt und auf 75° C aufgeheizt. Als Vorlage 2 wurde eine Monomermischung aus $\alpha$ − Methylstyrol, Acrylnitril und Comonomer (s. Tab.) zugegeben und 10 min emulgiert. Bei 75° C wurde eine Lösung von 0,35 Teilen Kaliumpersulfat in 20 Teilen Wasser zugegeben und 1 Stunde gerührt. Anschließend wurden die Monomerzuläufe 1 und 2 in einem Zeitraum von 5 Stunden gleichmäßig zudosiert. Nach beendeter Zugabe wurde 2 Stunden nachge − rührt, anschließend der Polymerlatex analysiert und aufgearbeitet.

Hierzu wurde der Polymerisatlatex durch Zugabe einer Lösung, enthaltend 1 % Essigsäure sowie 1 % Magnesiumsulfat, bei 98° C koaguliert. Das Koagulat wurde gewaschen und auf einen Restanteil an flüchtigen Bestandteilen von kleiner 2000 ppm getrocknet.

Aus den Tabellen wird deutlich, daß die erfindungsgemäßen Polymerisate hohe Glastemperaturen aufweisen und ihre Herstellung durch Emulsionspolymerisation zu deutlich scherstabilen Polymerlatices führt (vgl. A − I bis A − IV).

Dies gilt insbesondere bei der Polymerisation in Gegenwart geringer Emulgatormengen (A − 3) oder bei hohen Polymerfeststoffgehalten (A − 5).

T a b e l l e   (Beispiele)

| Beispiel | | A-1 | A-2 | A-3 | A-4 | A-5 |
|---|---|---|---|---|---|---|
| **Vorlage 1** | | | | | | |
| entionisiertes Wasser | (Teile) | 145 | 105 | 130 | 130 | 90 |
| Emulgator I | (Teile) | 2,5 | 2,5 | - | - | - |
| Emulgator II | (Teile) | - | - | 1,2 | 2,5 | 2,5 |
| **Vorlage 2** | | | | | | |
| AMS | (Teile) | 14 | 12 | 20 | 20 | 20 |
| ACN | (Teile) | 5 | 4 | 5 | 5 | 5 |
| Methacrylamid | (Teile) | 1 | 2 | 1 | 1 | 1 |
| Methylmethacrylat | (Teile) | - | - | - | - | - |
| t-DDM* | (Teile) | 0,05 | 0,05 | - | - | - |
| **Monomerzulauf 1** | | | | | | |
| AMS | (Teile) | 58 | 58 | 55 | 55 | 55 |
| ACN | (Teile) | 21 | 16 | 18 | 18 | 18 |
| t-DDM* | (Teile) | 0,1 | 0,1 | 0,05 | 0,05 | 0,05 |
| **Monomerzulauf 2** | | | | | | |
| Methacrylamid | (Teile) | 1 | 8 | 1 | 1 | 1 |
| entionisiertes Wasser | (Teile) | 20 | 60 | 20 | 20 | 20 |
| Polymerfeststoffgehalt % | | 33,5 | 34 | 34 | 35 | 40 |
| Latex-pH-Wert | | 8,1 | 8,0 | 8,7 | 8,9 | 8,9 |
| Latexrührstabilität $20^{0}$ C (sec) | | 60 | 50 | 60 | 60 | 52 |
| $75^{0}$ C | | 45 | | | | |
| (TMA, $^{0}$C) Glastemperatur | | 124 | 121 | 137 | 137 | 138 |

* t-DDM tert.-Dodecylmercaptan
  Emulgator I   Alkalisalz eines $C_{12}$-$C_{16}$-Alkylsulfonatgemisches
  Emulgator II Na-Salz der disproportionierten Abietinsäure

T a b e l l e   (Vergleichsbeispiele)

| Beispiel | | A-I | A-II | A-III | A-IV |
|---|---|---|---|---|---|
| **Vorlage 1** | | | | | |
| entionisiertes Wasser | (Teile) | 165 | 165 | 165 | 165 |
| Emulgator I | (Teile) | 2,5 | – | – | 2,5 |
| Emulgator II | (Teile) | – | 1,0 | 2,5 | – |
| **Vorlage 2** | | | | | |
| AMS | (Teile) | 12 | 12 | 20 | 25 |
| ACN | (Teile) | 6 | 6 | 6 | 4 |
| Methacrylamid | (Teile) | – | – | – | – |
| Methylmethacrylat | (Teile) | – | – | – | 3 |
| t-DDM* | (Teile) | 0,05 | 0,05 | 0,05 | 0,05 |
| **Monomerzulauf 1** | | | | | |
| AMS | (Teile) | 60 | 60 | 55 | 50 |
| ACN | (Teile) | 22 | 22 | 19 | 18 |
| t-DDM* | (Teile) | 0,1 | 0,1 | 0,05 | 0,05 |
| **Monomerzulauf 2** | | | | | |
| Methacrylamid | (Teile) | – | – | – | – |
| entionisiertes Wasser | (Teile) | – | – | – | – |
| Polymerfeststoffgehalt % | | 33 | 32 | 32 | 32 |
| Latex-pH-Wert | | 7,6 | 8,5 | 8,0 | 8,3 |
| Latexrührstabilität 20°C (sec) | | 30 | 5 | 32 | 27 |
| 75°C | | 2 | | | |
| (TMA, °C) Glastemperatur | | 124 | 121 | 136 | 130 |

\* t-DDM tert.-Dodecylmercaptan
    Emulgator I   Alkalisalz eines $C_{12}$-$C_{16}$-Alkylsulfonatgemisches
    Emulgator II Na-Salz der disproportionierten Abietinsäure

**Patentansprüche**

1.   Scherungsstabiler Terpolymerisatlatex, hergestellt durch Emulsionspolymerisation von
        a) 50 – 85 Gew. – Teilen α – Methylstyrol
        b) 10 – 50 Gew. – Teilen Acrylnitril
        c) 1 – 50 Gew. – Teilen Methacrylamid

**Claims**

1. A shear – stable terpolymer latex prepared by emulsion polymerization of
   a) 50 to 80 parts by weight $\alpha$ – methyl styrene,
   b) 10 to 50 parts by weight acrylonitrile and
   c) 1 to 50 parts by weight methacrylamide.

**Revendications**

1. Latex de terpolymère stable au cisaillement, fabriqué par polymérisation en émulsion de
   a) 50 – 85 parties en poids d'$\alpha$ – méthylstyrène
   b) 10 – 50 parties en poids d'acrylonitrile
   c) 1 – 50 parties en poids de méthacrylamide.